# EUROPÄISCHE PATENTSCHRIFT

(11) **EP 0 358 011 B1**
(45) Veröffentlichungstag und Bekanntmachung des Hinweises auf die Patenterteilung: **27.12.1995**
(21) Anmeldenummer: 89115196.1
(22) Anmeldetag: 17.08.1989
(51) Int. Cl.: C08G 77/58, C09D 183/14

(54) **Verfahren und Zusammensetzung zur Herstellung von kratzfesten Materialien**
Process and composition for preparing abrasion-resistant articles
Procédé et composition de fabrication d'objets résistants à l'abrasion

(30) Priorität: 18.08.1988 DE 3828098
(43) Veröffentlichungstag der Anmeldung: 14.03.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Philipp, Gottfried, Dr., D-8150 Holzkirchen (DE); Seiferling, Bernhard Dr., D-8758 Goldbach (DE); Schmidt, Helmut, Dr., D-8705 Zellingen (DE); Kaiser, Alfred, Dr., D-8702 Kist (DE); Hofmann, Klaus, D-8700 Würzberg (DE)
(74) Vertreter: Barz, Peter, Dr.

(56) Entgegenhaltungen:
- EP-A- 0 171 493
- US-A- 4 073 967
- US-A- 4 434 103
- DATABASE WPI, AN=77-80037y, Derwent Publications Ltd, Londen, GB; & JP-A-52 114 628 (TORAY INDS.) 26-09-1977

## Beschreibung

Zahlreiche Gegenstände müssen kratzfest sein bzw. mit kratzfesten Beschichtungen versehen werden, da eine Kratzempfindlichkeit keinen praktischen Einsatz oder nur kurze Einsatzzeiten ermöglichen würde. Viel bekannte kratzfeste Beschichtungsmaterialien bringen zumeist keine ausreichende Verbesserung, da sie entweder nicht kratzbeständig genug sind oder aber keine ausreichende Haftung bei geeigneter Schichtdicke auf dem Substrat besitzen. Daneben sind oft lange Aushärtungszeiten erforderlich.

In der EP-A-171 493 wird ein Verfahren zur Herstellung kratzfester Beschichtungen beschrieben, bei dem ein Lack, der erhalten worden ist durch hydrolytische Vorkondensation einer Titan- oder Zirkonverbindung und eines organofunktionellen Silans sowie gegebenenfalls eines schwerflüchtigen Oxids eines Elements der Hauptgruppen Ia bis Va oder der Nebengruppen IVb oder Vb des Periodensystems oder einer Verbindung, die unter den Reaktionsbedingungen ein derartiges Oxid bildet, mit unterstöchiometrischen Mengen an Wasser und anschließende Zugabe einer Wassermenge, die zur Hydrolyse der verbliebenen hydrolysierbaren Gruppen erforderlich ist, auf ein Substrat aufgebracht und gehärtet wird.

Obwohl dieses Verfahren zu Beschichtungen führt, die bezüglich vieler Eigenschaften, z.B. Kratzfestigkeit und Transparenz sehr zufriedenstellende Ergebnisse liefern, sind diese Beschichtungen für eine Reihe von Anwendungen noch verbesserungsbedürftig.

Ziel der Erfindung ist es daher, ein Verfahren und eine Zusammensetzung zur Herstellung von kratzfesten Materialien bereitzustellen, die Beschichtungen bzw. Formkörper liefern, die hinsichtlich ihrer Wasserdampfdurchlässigkeit, Licht- und UV-Stabilität und Haftung auf Substraten verschiedenster Art verbessert sind, ohne daß dadurch Einbußen bei anderen Eigenschaften, wie z.B. Kratz- und Abriebfestigkeit oder optische Eigenschaften, hingenommen werden müssen.

Gegenstand der Erfindung ist ein Verfahren zur Herstellung von kratzfesten Materialien, das dadurch gekennzeichnet ist, daß man eine Zusammensetzung, die erhalten worden ist durch hydrolytische Vorkondensation, gegebenenfalls in Anwesenheit eines Kondensationskatalysators, von
a) mindestens einem organofunktionellen Silan der Formel I

   R'ₘSiX₍₄₋ₘ₎ (I)

   in der die Gruppen X, die gleich oder verschieden sein können, Wasserstoff, Halogen, Alkoxy, Acyloxy, Alkylcarbonyl, Alkoxycarbonyl oder -NR˝₂ (R˝ = H und/oder Alkyl) bedeuten und die Reste R′, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR˝ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat,
   und/oder einem davon abgeleiteten Oligomeren, in einer Menge von 25 bis 95 Mol-%, bezogen auf die Gesamtmolzahl der (monomeren) Ausgangskomponenten;
b) mindestens einer Aluminiumverbindung der Summenformel II

   AlR₃ (II)

   in welcher die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können, und/oder einem davon abgeleiteten Oligomeren und/oder einem gegebenenfalls komplexierten Aluminiumsalz einer anorganischen oder organischen Säure,
   in einer Menge von 5 bis 75 Mol-%, bezogen auf die Gesamtmolzahl der (monomeren) Ausgangskomponenten; und gegebenenfalls
c) einem oder mehreren im Reaktionsmedium löslichen, schwerflüchtigen Oxiden eines Elementes der Hauptgruppe Ia bis Va oder der Nebengruppen IIb, IIIb, Vb bis VIIIb des Periodensystems, mit Ausnahme von Al,und/oder einer oder mehrerer im Reaktionsmedium löslichen, unter den Reaktionsbedingungen ein schwerflüchtiges Oxid bildenden Verbindungen eines dieser Elemente,
   in einer Menge von 0 bis 70 Mol-%, bezogen auf die Gesamtmolzahl der (monomeren) Ausgangskomponenten; mit einer geringeren Wassermenge als der zur vollständigen Hydrolyse der hydrolysierbaren Gruppen stöchiometrisch erforderlichen Menge, entweder
   (i) durch Zugabe von weiterem Wasser, das ganz oder teilweise die Hydrolyse der verbliebenen hydrolysierbaren Gruppen bewirkt, sowie gegebenenfalls eines Kondensationskatalysators, weiterkondensiert und daraufhin auf ein Substrat aufbringt bzw. einem Formgebungsprozeß unterwirft; und/oder
   (ii) auf ein Substrat aufbringt bzw. einem Formgebungsprozeß unterwirft, in einer wasserdampfhaltigen Atmosphäre weiterkondensiert;
      und anschließend härtet.

Gegenstand der Erfindung sind ferner die auf diese Weise erhaltenen Materialien, insbesondere mit kratzfesten Beschichtungen versehenen Substrate, und die durch Vorkondensation bzw. Weiterkondensation erhältlichen Zusammensetzungen.

Für die vorstehend angegebenen allgemeinen Formeln gilt: Alkylreste sind z.B. geradkettige, verzweigte oder cyclische Reste mit 1 bis 20, vorzugsweise 1 bis 10, Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl, Dodecyl, Octadecyl und Cyclohexyl.

Alkenylreste und Alkinylreste sind z.B. geradkettige, verzweigte oder cyclische Reste mit 2 bis 20, vorzugsweise 2 bis 10 Kohlenstoffatomen und mindestens einer C-C-Doppel- bzw. Dreifachbindung und insbesondere niedere Alkenylreste und Alkinylreste wie Vinyl, Allyl, 2-Butenyl, Ethinyl und Propargyl.

Die Alkoxy-, Acyloxy-, Alkylamino-, Dialkylamino-, Alkylcarbonyl-, Alkoxycarbonyl-, Alkylaryl-, Arylalkyl-, Alkenylaryl-, Arylalkenyl-, Alkinylaryl-, Arylalkinyl- und die substituierten Aminoreste oder Amidreste leiten sich z.B. von den vorstehend genannten Alkyl-, Alkenyl- und Alkinylresten ab. Spezielle Beispiele sind Methoxy, Ethoxy, n- und i-Propoxy, n-, sek.- und tert.-Butoxy, Isobutoxy, ß-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl, Ethoxycarbonyl, Benzyl, 2-Phenylethyl, Tolyl und Styryl. Bevorzugte Arylreste sind Phenyl, Hydroxyphenyl, Biphenyl und Naphthyl, wobei Phenyl besonders bevorzugt wird.

Die genannten Reste können gegebenenfalls einen oder mehrere Substituenten tragen, z.B. Halogenatome, niedere Alkyl- oder Alkoxyreste und Nitrogruppen. Hierbei werden Halogenatome (z.B. F, Cl, Br), insbesondere Fluoratome, die dem Endprodukt hydrophobe Eigenschaften und insbesondere gute Schwitzwasserbeständigkeit verleihen können, bevorzugt. Als besonders vorteilhaft haben sich in diesem Zusammenhang halogenierte, insbesondere fluorierte Silane der Formel I erwiesen.

Unter den Halogenen, die direkt an das Zentralatom gebunden sind, sind Fluor, Chlor und Brom bevorzugt. Besonders bevorzugt ist Chlor.

Erfindungsgemäß verwendbare Aluminiumverbindungen sind insbesondere solche mit der Summenformel

AlR₃ (II)

in welcher die Reste R, die gleich oder verschieden sein können, Halogen, insbesondere Cl und/oder Br, Alkyl, Alkoxy, Acyloxy oder Hydroxy bedeuten, wobei die soeben genannten Gruppen ganz oder teilweise durch Chelatliganden ersetzt sein können. Die Anwesenheit eines Chelatliganden wird insbesondere dann bevorzugt, wenn zwei oder drei gleiche Reste R zu einer gegenüber H₂O sehr reaktiven Verbindung AlR₃ führen und dadurch die Kontrolle der Hydrolysereaktion und die Vermeidung von Ausfällungen erschweren würden. Beispiele für solche Reste R sind Halogen und Alkyl. Auch für R = OH ist die Verwendung eines Chelatliganden vorteilhaft. Gängige Chelatliganden sind z.B. Acetylaceton und Acetessigsäureethylester.

Auch Al-Salze anorganischer und organischer Säuren, wie z.B. HNO₃, H₂SO₄, H₃PO₄ und Ameisensäure, Essigsäure, Propionsäure und Oxalsäure können erfindungsgemäß Verwendung finden. In diesem Fall empfiehlt sich ebenfalls die Komplexierung mit einem Chelatliganden.

Konkrete Beispiele für erfindungsgemäß verwendbare Aluminiumverbindungen sind Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-sek.-C₄H₉)₃, AlCl₃, AlCl(OH)₂, Aluminiumformiat, Aluminiumacetat und Aluminiumoxalat sowie die entsprechenden (teilweise) chelatisierten Verbindungen, wie z.B. die Acetylacetonate. Bei Raumtemperatur flüssige Verbindungen, wie z.B. Al(O-sek.-C₄H₉)₃ und Al(O-i-C₃H₇)₃ werden besonders bevorzugt.

Bei den organofunktionellen Silanen kann die Gruppe R′ gegebenenfalls durch Sauerstoff- oder Schwefelatome oder -NR˝-Gruppen unterbrochen sein.

Spezielle Beispiele für geeignete organofunktionelle Silane sind:
CH₃-Si-Cl₃, CH₂-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, CH₂=CH-Si-(OOCCH₃)₃, CH₂=CH-SiCl₃, CH₂=CH-CH₂-Si-(OCH₃)₃, CH₂=CH-CH₂-Si-(OC₂H₅)₃, C₃H₇-Si-(OCH₃)₃, C₆H₅-Si-(OCH₃)₃, C₆H₅-Si-(OC₂H₅)₃,(CH₃)₂-Si-Cl₂, (CH₃)₂-Si-(OC₂H₅)₂, (C₂H₅)₂-Si-(OC₂H₅)₂, (CH₃)(CH₂=CH)-Si-Cl₂, (CH₃)₃-Si-Cl, (C₂H₅)₃-Si-Cl, (CH₃)₂-Si-(OCH₃)₂, (CH₃)₂-Si-(OC₂H₅)₂, (C₆H₅)₂-Si-Cl₂, (C₆H₅)₂-Si-(OCH₃)₂, (C₆H₅)₂-Si-(OC₂H₅)₂, (t-C₄H₉) (CH₃)₂-Si-Cl, (CH₃)₂(CH₂=CH-CH₂)-Si-Cl, (CH₃O)₃-Si-C₃H₆-Cl, (C₂H₅O)₃-Si-C₃H₆-CN, 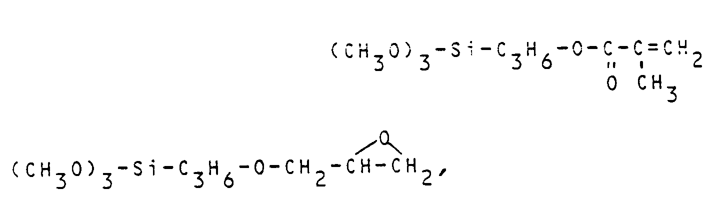
(CH₃O)₃-Si-C₃H₆-NH₂, (C₂H₅O)₃-Si-C₃H₆-NH₂, (C₂H₅O)₂(CH₃)Si-C₃H₆-NH₂, H₂N-CH₂-CH₂-NH-C₃H₆-Si-(OCH₃)₃, H₂N-CH₂-CH₂-NH-CH₂-CH₂-NH-C₃H₆-Si-(OCH₃)₃, 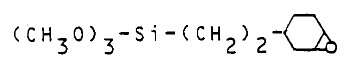
Diese Silane sind zum Teil Handelsprodukte oder sie lassen sich nach bekannten Methoden herstellen; vgl. W. Noll, "Chemie und Technologie der Silicone", Verlag Chemie GmbH, Weinheim/Bergstraße (1968).

Vorzugsweise ist in den Silanen der allgemeinen Formel I der Index m = 1. Bei höheren Werten von m besteht die Gefahr, daß die Härte des Materials abnimmt, falls zuviel derartiges Silan eingesetzt wird. Dementsprechend werden im allgemeinen die besten Ergebnisse erzielt, wenn wenigstens 60 Mol-%, insbesondere wenigstens 75 Mol-% und am meisten bevorzugt wenigstens 90 Mol-% in Bezug auf die Gesamtmolzahl an verwendeten Silanen der Formel (I) Silane sind, bei denen m in der Formel (I) gleich 1 ist. Die Menge an Silanen der Formel (I), worin m gleich 3 ist, beträgt vorzugsweise nicht mehr als 5 Mol-% der verwendeten Silane. Besonders bevorzugte Silane der vorliegenden Erfindung sind γ-Glycidyloxypropyltrialkoxysilane, γ-Aminopropyltrialkoxysilane, Propyltrialkoxysilane, Phenyltrialkoxysilane, Vinyltrialkoxysilane und Mischungen davon. In diesen Verbindungen bedeutet "Alkoxy" vorzugsweise Methoxy oder Ethoxy.

Anstelle der monomeren Ausgangssilane können gegebenenfalls auch vorkondensierte, im Reaktionsmedium lösliche Oligomere dieser Silane eingesetzt werden; d.h. geradkettige oder cyclische, niedermolekulare Teilkondensate (Polyorganosiloxane) mit einem Kondensationsgrad von z.B. etwa 2 bis 100, insbesondere etwa 2 bis 6. Entsprechendes gilt für die Aluminiumkomponente (b) und die Komponente (c). Gegebenenfalls kann auch ein Oligomeres eingesetzt werden, das voneinander verschiedene Zentralatome aufweist.

Als Komponente (c) werden im Reaktionsmedium lösliche, schwerflüchtige Oxide oder derartige schwerflüchtige Oxide bildende Verbindungen von Elementen der Hauptgruppen Ia bis Va oder der Nebengruppen IIb, IIIb, Vb bis VIII b des Periodensystems mit Ausnahme von Al eingesetzt. Vorzugsweise leitet sich die Komponente (c) von folgenden Elementen ab: Erdalkalimetalle, wie Mg und Ca; B, Si, Sn, Pb, P, As, Sb, Bi, Cr, Mo, W, Mn, Fe, Co, Ni, Zn und/oder V, wobei B, Si, Sn, Zn und P besonders bevorzugt sind. Auch die Lanthaniden und Actiniden können gegebenenfalls eingesetzt werden.

Unter den schwerflüchtigen Oxiden sind B₂O₃, P₂O₅ und SnO₂ besonders bevorzugt.

Im Reaktionsmedium lösliche, schwerflüchtige Oxide bildende Verbindungen sind z.B. anorganische Säuren, wie Phosphosäure und Borsäure, sowie deren Ester. Ferner eignen sich z.B. Halogenide, wie SiCl₄, HSiCl₃, SnCl₄ und PCl₅, und Alkoxide wie Ca(OR)₂, Si(OR)₄, Sn(OR)₄ und VO(OR)₃, wobei sich R von niederen Alkoholen, wie Methanol, Ethanol, Propanol oder Butanol, ableitet. Weitere verwendbare Ausgangsverbindungen sind entsprechende Salze mit flüchtigen Säuren, z.B. Acetate, wie Siliciumtetraacetat, basische Acetate, wie basisches Bleiacetat, und Formiate.

Vorzugsweise verwendet man zur Herstellung der erfindungsgemäßen Zusammensetzung 40 bis 90, insbesondere 40 bis 80, und besonders bevorzugt 70 bis 80 Mol-% der Komponente (a), 10 bis 40, insbesondere 10 bis 30, und besonders bevorzugt 15 bis 25 Mol-% der Komponente (b) und höchstens 50, insbesondere höchstens 40 Mol-% der Komponente (c).

Zur Herstellung des Lacks werden die Ausgangskomponenten im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Diese unterstöchiometrische Wassermenge wird vorzugsweise so zudosiert, daß lokale Überkonzentrationen und dadurch verursachte Ausfällungen (von z.B. Al₂O₃ . xH₂O) vermieden werden. Dies kann z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80-prozentigem Ethanol, oder Salzhydraten, z.B. CaCl₂.6H₂O, geschehen. Ein anderer Weg ist die Wasserzuführung durch ein System, das Komponenten enthält, die miteinander reagieren und dabei langsam Wasser freisetzen, wie dies z.B. bei der Esterbildung aus Alkohol und Säure der Fall ist (ccc = chemically controlled condensation).

Vorzugsweise erfolgt die Vorkondensation in Gegenwart eines Kondensationskatalysators. Gegebenenfalls, insbesondere dann, wenn eine der Komponenten (a) bis (c) stark unpolar ist (z.B. ein Silan mit R′ = Aryl), kann ein mit Wasser zumindest teilweise mischbares organisches Lösungsmittel angewandt werden, z.B. ein aliphatischer Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon. n-Butanol wird als Lösungsmittel bevorzugt. Eventuell während der Vorkondensation zugesetztes oder gebildetes Lösungsmittel wird vorzugsweise nicht abgedampft, sondern das Reaktionsgemisch wird als solches zur Weiterkondensation eingesetzt.

Als Kondensationskatalysatoren eignen sich Protonen oder Hydroxylionen abspaltende Verbindungen und Amine. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Besonders vorteilhaft ist es, wenn bereits eine der Reaktionskomponenten (a) bis (c) als Kondensationskatalysator wirkt. Hier sind insbesondere die Silane (a) zu nennen, die einen oder mehrere Reste R′ aufweisen, die mit basischen Gruppen, z.B. -NH₂, substituiert sind. So haben sich z.B. Aminoalkylsilane für diese Zwecke sehr bewährt. Konkrete Beispiele für derartige Verbindungen sind γ-Aminopropylsilane, insbesondere γ-Aminopropyltri(m)ethoxysilan. Die Verwendung derartiger Verbindungen als Reaktionskomponenten hat den zusätzlichen Vorteil, daß dadurch eine entscheidende Verbesserung der Haftung der Zusammensetzung auf verschiedenen Substraten, z.B. Kunststoff, Metall, Glas, und gleichzeitig eine deutliche Steigerung der Kratz- und Abriebfestigkeit beobachtet werden kann. Derartige,als Kondensationskatalysator wirkende Reaktionskomponenten können entweder alleine oder in Kombination mit den üblichen, oben erwähnten Kondensationskatalysatoren verwendet werden.

Die Vorkondensation wird üblicherweise bei Temperaturen von -20 bis 100^{o}C, vorzugsweise bei 0 bis 30^{o}C durchgeführt. Bei Verwendung eines organischen Lösungsmittels kann die Vorkondensation auch bei Temperaturen bis zur Siedetemperatur des Lösungsmittels erfolgen, wird jedoch auch hier vorzugsweise bei 0 bis 30^{o}C durchgeführt.

Gegebenenfalls kann man zunächst eine oder mehrere Ausgangskomponenten oder einen Teil einer, mehrerer oder aller Ausgangskomponenten vorkondensieren, dann die restlichen Ausgangskomponenten zumischen und anschließend nach dem Verfahren der Vorkondensation oder Weiterkondensation cokondensieren.

Die anschließende hydrolytische Weiterkondensation des Vorkondensats erfolgt in Gegenwart von weiterem Wasser, das ganz oder teilweise, z.B. zu mindestens 80 %, insbesondere mindestens 90 %, die Hydrolyse der noch verbliebenen hydrolysierbaren Gruppen bewirkt. Bevorzugt wird ein Wasserüberschuß, bezogen auf die noch vorhandenen hydrolysierbaren Gruppen, eingesetzt. In einer aus praktischen Gründen bevorzugten Ausführungsform wird zur Weiterkondensation die Wassermenge eingesetzt, die zur vollständigen Hydrolyse der ursprünglich eingesetzten Ausgangskomponenten stöchiometrisch erforderlich wäre (das bereits eingesetzte Wasser bleibt dabei also unberücksichtigt).

Um Ausfällungen so weit wie möglich zu vermeiden, wird es besonders bevorzugt, die Wasserzugabe in mehreren Stufen, z.B. in drei Stufen, durchzuführen. Dabei wird in der ersten Stufe z.B. 1/10 bis 1/20 der zur Hydrolyse stöchiometrisch benötigten Wassermenge zugegeben. Nach kurzem Rühren folgt die Zugabe von 1/5 bis 1/10 der stöchiometrischen Wassermenge und nach weiterem kurzen Rühren wird schließlich eine stöchiometrische Wassermenge zugegeben, so daß am Schluß ein leichter Wasserüberschuß vorliegt.

Die Weiterkondensation erfolgt vorzugsweise in Gegenwart eines der vorstehend genannten Kondensationskatalysatoren, wobei ebenfalls flüchtige Verbindungen und Reaktionskomponenten (a) bevorzugt sind. Die Gesamt-Katalysatorkonzentration kann z.B. bis zu 5 Mol/Liter betragen.

Bei der Weiterkondensation kann gegebenenfalls auch eines der vorstehend genannten organischen Lösungsmittel anwesend sein oder zugesetzt werden, wobei während der Vor- und Weiterkondensation gebildetes Lösungsmittel oder zur Vor- oder Weiterkondensation eventuell zugesetztes Lösungsmittel nach beendeter Weiterkondensation vorzugsweise nicht abgedampft wird.

Das Vorkondensat reagiert aufgrund seiner Hydrolyseempfindlichkeit mit Wasserdampf und kann daher auch in einer wasserdampfhaltigen Atmosphäre weiterkondensiert werden. In diesem Fall kann ganz oder teilweise auf die Zugabe von weiterem Wasser zum Kondensat verzichtet werden.

Die Weiterkondensation erfolgt gewöhnlich bei Temperaturen von -20 bis 100^{o}C, vorzugsweise 0 bis 30^{o}C.
Überraschenderweise hat sich gezeigt, daß beim Erhitzen der erhaltenen Zusammensetzung auf 40 bis 80^{o}C ohne Abdampfen des Lösungsmittels eine Stabilisierung ihrer Viskosität erzielt wird; d.h. die Viskosität bleibt nach erfolgter Polykondensation über Längere Zeit im wesentlichen konstant.

Die Zusammensetzung ist nach dem Vorkondensieren bzw. nach dem Weiterkondensieren als solche verwendungsfähig. Gegebenenfalls können jedoch übliche Additive zugesetzt werden, z.B. organische Verdünnungsmittel, Verlaufmittel, Färbemittel (Farbstoffe oder Pigmente), UV-Stabilisatoren, Füllstoffe, Viskositätsregler, Gleitmittel, Netzmittel, Antiabsetzmittel oder Oxidationsinhibitoren.

Die Verarbeitung der Zusammensetzung muß innerhalb einer bestimmten Topfzeit erfolgen. Diese Topfzeit hängt stark von der Art und Menge der verwendeten Komponenten (a) bis (c) ab und kann z.B. 1 Tag, aber auch eine Woche oder sogar länger betragen.

Für Beschichtungszwecke werden übliche Beschichtungsverfahren angewandt, z.B. das Tauchen, Fluten, Gießen, Schleudern, Spritzen oder Aufstreichen. Erfindungsgemäß wird die Herstellung von Beschichtungen zwar bevorzugt, die erfindungsgemäßen Zusammensetzungen können aber auch als solche zu Gegenständen verformt werden. Dazu bedient man sich üblicher Formgebungsverfahren, wie z.B. Gießen, Spritzgießen und Strangpressen.

Als Substrate für Beschichtungen eignen sich beliebige Werkstoffe, z.B. Metalle (insbesondere Messing und Aluminium), Kunststoffe, Keramik,Glas , Papier oder Holz. Auch die Form des Substrats kann beliebig gewählt werden. Besonders vorteilhafte Ergebnisse werden mit (kratzempfindlichen) Kunststoffen erzielt, z.B. Polymethacrylaten, Polycarbonaten, Polystyrolen, insbesondere mit Poly(diethylenglykol-bis-allylcarbonat). Generell verleihen die erfindungsgemäß hergestellten Beschichtungen den Substraten u.a. eine höhere Verschleißfestigkeit.

Die Beschichtung wird in Schichtdicken von z.B. 1 bis 100 »m, vorzugsweise 2 bis 30 »m und insbesondere 5 bis 15 »m aufgetragen. Gegebenenfalls kann das Substrat vor Aufbringen der erfindungsgemäßen Beschichtung mit einer Haftvermittler- oder Primerschicht grundiert werden.

Erfindungsgemäß bevorzugt wird eine Oberflächenvorbehandlung der zu beschichtenden Substrate durch Ausheizen (z.B. bei PMMA), Auslaugen oder Einwirkung einer elektrischen Entladung (Corona, Niederdruck und dergl.). Auch eine Halogenierung, insbesondere Fluorierung, der Oberfläche kann sich besonders bei der Beschichtung von Kunststoffen als vorteilhaft erweisen.

Die aufgetragene oder einem Formgebungsverfahren unterworfene Zusammensetzung wird anschließend ausgehärtet, indem man sie z.B. wärmebehandelt. Zur Aushärtung genügt im allgemeinen ein einige Minuten bis 1 Stunde dauerndes Erhitzen auf eine Temperatur von bis zu 200^{o}C, vorzugsweise 60 bis 150^{o}C und insbesondere 80 bis 130^{o}C. Lediglich im Falle des Vorkondensats können etwas längere Härtungszeiten erforderlich sein, z.B. bis zu 2 Stunden. Über die Temperaturführung bei Weiterkondensation und Härtung können die Eigenschaften der Beschichtung oder des Formkörpers noch in gewissem Rahmen variiert werden. So kann man z.B. zunächst eine relativ niedrige Tempeatur wählen und in einer zweiten Stufe die Temperatur erhöhen. Alternativ dazu kann man z.B. von Anfang an auf eine Temperatur am oberen Ende der angegebenen Bereiche erhitzen.

Im Falle von Beschichtungen kann auch eine Mehrfachbeschichtung erfolgen. Dazu sollte jedoch vor Auftragen der letzten Schicht nicht vollständig gehärtet werden, sondern nur teilweise (z.B. Erhitzen für (jeweils) 5 bis 15 Minuten).

Zusätzlich zum oder statt des Erhitzens ist z.B. auch eine Härtung durch Bestrahlung (z.B. mit einem (IR-)Laser) möglich.

Falls das Vorkondensat oder die weiterkondensierte Zusammensetzung aufgrund der Verwendung entsprechender Ausgangskomponenten polymerisierbare Gruppen enthält, kann die aufgetragene Lackschicht zusätzlich auch photochemisch gehärtet werden, z.B. mit UV-Strahlen. In diesem Fall werden der Lackformulierung vorzugsweise Photoinitiatoren zugesetzt. Für diesen Zweck bekannte Photoinitiatoren sind z.B. die unter den Warenzeichen Irgacure ® und Dorocur ® im Handel erhältlichen. Auch sonst kann sich eine chemische und/oder physikalische Nachbehandlung der Beschichtung bzw. des Formkörpers als vorteilhaft erweisen. Hier wäre insbesondere die Behandlung mit (energiereicher) Strahlung (UV, Laser, IR, Mikrowellen etc.) zu nennen.

Die nach dem erfindungsgemäßen Verfahren hergestellten Materialien zeigen eine gute Kratzfestigkeit. Erfindungsgemäß beschichtete Substrate weisen eine gute Haftung zwischen Substratoberfläche und Beschichtung auf. Außerdem zeigen die Beschichtungen eine gute Witterungsbeständigkeit (Beständigkeit gegen UV-Strahlung und salzhaltige Sprühnebel, geringe Wasserdampfdurchlässigkeit) und eignen sich deshalb besonders gut zum Schutz von Materialien im Außenbereich, z.B. von Kunststoffen und Metallen (Korrosionsschutz z.B. bei Messing). Auch die Elastizität der Beschichtungen ist sehr zufriedenstellend. Ebenso zeichnen sich erfindungsgemäß erhaltene Beschichtungen durch eine hohe optische Qualität aus, was sie z.B. zur Verwendung bei optischen Abbildungssystemen, wie z.B. (Brillen-)Linsen geeignet macht.

Die folgenden Beispiele erläutern die Erfindung.

### Beispiel 1

94,5 g γ-Glycidyloxypropyltrimethoxysilan, 11 g γ-Aminopropyltrimethoxysilan, 57,5 g Propyltrimethoxysilan und 49 g Aluminiumsekundärbutylat werden in einem 3-Halskolben 5 Minuten unter Eiskühlung gerührt. Anschließend werden 3,4 g destilliertes Wasser langsam zu der Mischung getropft und die Mischung wird 5 Minuten gerührt. Danach werden 6,8 g destilliertes Wasser der Mischung zugeführt und 15 Minuten lang gerührt. Schließlich werden 54 g Wasser zu der Mischung gegeben und die Mischung wird 2 Stunden bei Raumtemperatur gerührt.

Um aus dem Reaktionsgemisch ein beschichtungsfähiges System zu erhalten, werden zu der Mischung 0,8 g eines Verlaufmittels und 100 g n-Butanol als Lösemittel gegeben. Es entsteht eine klar, niedrigviskose Lösung. Die Beschichtungslösung wird im Tauchverfahren auf eine PMMA-Platte aufgetragen und bei 90^{o}C ausgehärtet.

Die auf diese Weise hergestellte Beschichtung ist klar und transparent und weist nur sehr geringe Streulichtverluste auf. Sie zeichnet sich weiterhin durch eine hohe Oberflächenhärte und Abriebfestigkeit sowie eine gute Schwitzwasser- und Lichtbeständigkeit bei gleichzeitig guten elastischen Eigenschaften aus.

### Beispiel 2

57,7 g Phenyltrimethoxysilan werden in 31,3 g n-Butanol gelöst. Anschließend gibt man bei Raumtemperatur 4,32 g 0,01 n NH₃ zu und rührt 10 min lang. Nach der Zugabe von 85,6 g γ-Glycidyloxypropyltrimethoxysilan, 8,8 g
γ-Aminopropyltrimethoxysilan und 39,4 g
Aluminiumsekundärbutylat wird das Rühren für weitere 5 min fortgesetzt. Daran schließt sich das Zutropfen von 6,2 g H₂O unter Eiskühlung an, worauf 15 Minuten gerührt wird. Schließlich werden 49,7 g H₂O unter Eiskühlung zur Reaktionsmischung getropft, gefolgt von 2-stündigem Rühren bei Raumtemperatur.

Nach Zugabe eines Lacklösemittels und eines Verlaufmittels wird ein beschichtungsfähiges System erhalten.

### Beispiel 3

5,9 g Vinyltrimethoxysilan, 28,3 g
γ-Glycidyloxypropyltrimethoxysilan und 9,81 g
Aluminiumsekundärbutylat werden unter Eiskühlung gerührt. Zu dieser Mischung werden langsam 0,88 g 0,1 n NaOH zugetropft, worauf man 5 min rührt und dann 1,76 g 0,1 n NaOH unter Eiskühlung zugetropft,gefolgt von erneutem 5-minütigem Rühren, Schließlich werden 14,4 g 0,1 n NaOH langsam zugetropft, worauf die Reaktionsmischung bei Raumtemperatur gerührt wird.

Nach Zugabe eines Lacklösemittels und eines Verlaufmittels wird ein beschichtungsfähiges System erhalten.

## Patentansprüche

1. Verfahren zur Herstellung von kratzfesten Materialien, dadurch gekennzeichnet, daß man eine Zusammensetzung, die erhalten worden ist durch hydrolytische Vorkondensation, gegebenenfalls in Anwesenheit eines Kondensationskatalysators, von
a) mindestens einem organofunktionellen Silan der Formel I
R'ₘSiX₍₄₋ₘ₎ (I)
in der die Gruppen X, die gleich oder verschieden sein können, Wasserstoff, Halogen, Alkoxy, Acyloxy, Alkylcarbonyl, Alkoxycarbonyl oder -NR˝₂ (R˝ = H und/oder Alkyl) bedeuten und die Reste R′, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR˝ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy, Epoxy- oder Vinylgruppen tragen können und m den Wert 1, 2 oder 3 hat,
und/oder einem davon abgeleiteten Oligomeren, in einer Menge von 25 bis 95 Mol-%, bezogen auf die Gesamtmolzahl der (monomeren) Ausgangskomponenten;
b) mindestens einer Aluminiumverbindung der Summenformel II
AlR₃ (II)
in welcher die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können, und/oder einem davon abgeleiteten Oligomeren und/oder einem gegebenenfalls komplexierten Aluminiumsalz einer anorganischen oder organischen Säure,
in einer Menge von 5 bis 75 Mol-%, bezogen auf die Gesamtmolzahl der (monomeren) Ausgangskomponenten; und gegebenenfalls
c) einem oder mehreren im Reaktionsmedium löslichen, schwerflüchtigen Oxiden eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente,
in einer Menge von 0 bis 70 Mol-%, bezogen auf die Gesamtmolzahl der (monomeren) Ausgangskomponenten; mit einer geringeren Wassermenge als der zur vollständigen Hydrolyse der hydrolysierbaren Gruppen stöchiometrisch erforderlichen Menge, entweder
(i) durch Zugabe von weiterem Wasser, das ganz oder teilweise die Hydrolyse der verbliebenen hydrolysierbaren Gruppen bewirkt, sowie gegebenenfalls eines Kondensationskatalysators, weiterkondensiert und daraufhin auf ein Substrat aufbringt bzw. einem Formgebungsprozeß unterwirft; und/oder
(ii) auf ein Substrat aufbringt bzw. einem Formgebungsprozeß unterwirft, in einer wasserdampfhaltigen Atmosphäre weiterkondensiert;
und anschließend härtet.

2. Verfahren nach Anspruch 1, dadurch gekennzeichnet, daß die Zusammensetzung als Lack verwendet wird, der auf ein Substrat aufgebracht wird.

3. Verfahren nach Anspruch 1 oder Anspruch 2, dadurch gekennzeichnet, daß zur Herstellung der kratzfesten Materialien, bezogen auf Gesamt-Molzahl der Ausgangskomponenten, 40 bis 90 Mol-%, insbesondere 40 bis 80 Mol-% der Komponente (a), 10 bis 40 Mol-%, insbesondere 10 bis 30 Mol-%, der Komponente (b) und höchstens 50 Mol-% der Komponente (c) verwendet worden sind.

4. Verfahren nach einem der Ansprüche 1 bis 3, dadurch gekennzeichnet, daß die Weiterkondensation in Gegenwart eines sauren oder basischen Kondensationskatalysators durchgeführt worden ist.

5. Verfahren nach einem der Ansprüche 1 bis 4, dadurch gekennzeichnet, daß die zur Vorkondensation eingesetzte Wassermenge mittels feuchtigkeitshaltiger Adsorbentien, wasserhaltiger organischer Lösungsmittel, Salzhydraten oder wasserbildender Systeme eingetragen worden ist.

6. Verfahren nach einem der Ansprüche 2 bis 5, dadurch gekennzeichnet, daß man die Substratoberfläche vor der Aufbringung des Lacks mit einem Primer behandelt, ausheizt, auslaugt und /oder einer elektrischen Entladung aussetzt.

7. Verfahren nach einem der Ansprüche 1 bis 6, dadurch gekennzeichnet, daß man die Zusammensetzung durch Wärmebehandlung bei einer Temperatur bis 200^{o}C, vorzugsweise 60 bis 150^{o}C und/oder durch Behandlung mit Strahlung, vorzugsweise IR- oder Mikrowellen, härtet.

8. Verfahren nach einem der Ansprüche 1 bis 7, dadurch gekennzeichnet, daß man die gehärtete Zusammensetzung chemisch und/oder physikalisch, vorzugsweise mit Laser-(UV)-Strahlung, nachbehandelt.

9. Verfahren nach einem der Ansprüche 1 bis 8, dadurch gekennzeichnet, daß man der Zusammensetzung übliche Additive, wie organische Verdünnungsmittel, Verlaufmittel, Färbemittel, UV-Stabilisatoren, Füllstoffe, Viskositätsregler, Gleitmittel, Netzmittel, Antiabsetzmittel und Oxidationsinhibitoren, einverleibt.

10. Kratzfeste Materialien, insbesondere mit kratzfesten Beschichtungen versehene Substrate, erhältlich nach dem Verfahren eines der Ansprüche 1 bis 9.

11. Zusammensetzung zur Herstellung von kratzfesten Materialien, dadurch gekennzeichnet, daß sie erhalten worden ist durch hydrolytische Vorkondensation, gegebenenfalls in Gegenwart eines Kondensationskatalysators, von
a) mindestens einem organofunktionellen Silan der Formel I
R'ₘSiX₍₄₋ₘ₎ (I)
in der die Gruppen X, die gleich oder verschieden sein können, Wasserstoff, Halogen, Alkoxy, Acyloxy, Alkylcarbonyl, Alkoxycarbonyl oder -NR˝₂ (R˝ = H und/oder Alkyl) bedeuten und die Reste R′, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR˝ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat,
und/oder einem davon abgeleiteten Oligomeren, in einer Menge von 25 bis 95 Mol-%, bezogen auf die Gesamtzahl der (monomeren) Ausgangskomponenten;
b) mindestens einer Aluminiumverbindung der Summenformel II
AlR₃ (II)
in welcher die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können, und/oder einem davon abgeleiteten Oligomeren und/oder einem gegebenenfalls komplexierten Aluminiumsalz einer anorganischen oder organischen Säure,
in einer Menge von 5 bis 75 Mol-%, bezogen auf die Gesamtmolzahl der (monomeren) Ausgangskomponenten; und gegebenenfalls
c) einem oder mehreren im Reaktionsmedium löslichen, schwerflüchtigen Oxiden eines Elementes der Hauptgruppen Ia bis Va oder der Nebengruppen IIb, IIIb, Vb bis VIIIb des Periodensystems, mit Ausnahme von Al,und/oder einer oder mehrerer im Reaktionsmedium löslichen, unter den Reaktionsbedingungen ein schwerflüchtiges Oxid bildenden Verbindungen eines dieser Elemente,
in einer Menge von 0 bis 70 Mol-%, bezogen auf die Gesamtmolzahl der (monomeren) Ausgangskomponenten; mit einer geringeren Wassermenge als der zur vollständigen Hydrolyse der hydrolysierbaren Gruppen stöchiometrisch erforderlichen Menge.

12. Zusammensetzung nach Anspruch 11, dadurch gekennzeichnet, daß sie durch Zugabe von weiterem Wasser, das ganz oder teilweise die Hydrolyse der verbliebenen hydrolysierbaren Gruppen bewirkt, sowie gegebenenfalls eines Kondensationskatalysators weiterkondensiert worden ist.

13. Zusammensetzung nach Anspruch 11 oder 12, dadurch gekennzeichnet, daß sie übliche Additive, wie organische Verdünnungsmittel, Verlaufmittel, Färbemittel, UV-Stabilisatoren, Füllstoffe, Viskositätsregler, Gleitmittel, Netzmittel, Antiabsetzmittel oder Oxidationsinhibitoren enthält.

## Claims

1. Process for the production of scratch-resistant materials, characterised in that a composition obtained by hydrolytic pre-condensation, optionally in the presence of a condensation catalyst:
a) of at least one organo-functional silane with the formula I
R'ₘSiX₍₄₋ₘ₎ (I)
in which the groups X, which may be the same or different, relate to hydrogen, halogen, alkoxy, acyloxy, alkylcarbonyl, alkoxycarbonyl or -NR''₂ (R'' = H and or alkyl) and the residual groups R', which may be the same or different, represent alkyl, alkenyl, alkinyl, aryl, arylalkyl, alkylaryl, arylalkenyl, alkenylaryl, arylalkinyl or alkinylaryl, and these residual groups may be separated by O- or S-atoms or the group -NR'' and may carry one or more substitutes from the halogen group and the optionally substituted amino, amid, aldehyde, keto, alkylcarbonyl, carboxy, mercapto, cyano, hydroxy, alkoxy, alkoxycarbonyl, sulphonic acid, phosphoric acid, acryloxy, methacryloxy, epoxy or vinyl groups, and m has the value 1, 2 or 3,
and/or an oligomer derived therefrom, in an amount of 25 to 95% mol. calculated on the basis of the total mol. number of the starting (monomer) component;
b) of at least one aluminium compound of the total formula II
AlR₃ (II)
in which the residual groups, which may be the same or different, relate to halogen, alkyl, alkoxy, acyloxy or hydroxy, and the last-mentioned groups may be replaced by chelate ligands,
and/or an oligomer derived therefrom,
and/or an optionally complexed aluminium salt of an inorganic or organic acid, in an amount of 5 to 75% mol., calculated on the basis of the total mol. number of the starting (monomer) component; and optionally
c) of one of more not easily volatilised oxides, soluble in the reactant, of an element of the main group Ia to Va or the subsidiary groups IIb, IIIb, Vb to VIIIb in the periodic system, with the exception of Al, and/or one or more compounds of one of these elements, soluble in the reactant and not easily volatilised under the reaction conditions, in an amount of 0 to 70% mol., calculated on the basis of the total mol. number of the starting (monomer) component;
with a smaller amount of water than the amount required stoichiometrically for the complete hydrolysis of the hydrolysable groups, is either
(i) further condensed by adding additional water which completely or partially hydrolyses the remaining hydrolysable groups, and optionally a condensation catalyst, and is then applied onto a substrate or is subjected to a forming process; and/or
(ii) is applied onto a substrate or is subjected to a forming process, is further condensed in an atmosphere containing steam;
and is subsequently hardened.

2. Process according to Claim 1, characterised in that the composition is used as a paint which is applied onto a substrate.

3. Process according to Claim 1 or Claim 2, characterised in that for the production of the scratch-resistant materials - calculated on the basis of the total mol. number of the starting components - 40 to 90% mol, in particular 40 to 80% mol., of component (a), 10 to 40% mol., in particular 10 to 30% mol., of component (b) and 50 % mol. at maximum of component (c) were used.

4. Process according to one of Claims 1 to 3, characterised in that the further condensation was carried out in the presence of an acid or base condensation catalyst.

5. Process according to one of Claims 1 to 4, characterised in that the amount of water used for pre-condensation was introduced by means of moisture-containing absorbers, aqueous organic solvents, salt hydrates or water-forming systems.

6. Process according to one of Claims 2 to 5, characterised in that the surface of the substrate is heated, leached out and/or subjected to an electrical discharge prior to application of the paint with a primer.

7. Process according to one of Claims 1 to 6, characterised in that the composition is hardened by heat treatment at a temperature of up to 200°C, preferably 60 to 150°C, and/or by treatment with radiation, preferably IR- or microwaves.

8. Process according to one of Claims 1 to 7, characterised in that the hardened composition is subjected to chemical and/or physical after-treatment, preferably with laser (uv) radiation.

9. Process according to one of Claims 1 to 8, characterised in that the usual additives such as organic dilutants, levelling agents, colouring agents, uv stabilisers, fillers, viscosity regulators, lubricants, wetting agents, anti-settling agents and oxidation inhibitors, are incorporated into the composition.

10. Scratch-resistant materials, in particular substrates provided with scratch-resistant coatings, which may be obtained using the process according to Claims 1 to 9.

11. Composition for the production of scratch-resistant materials, characterised in that it was obtained by the hydrolytic pre-condensation, optionally in the presence of a condensation catalyst:
a) of at least one organo-functional silane with the formula I
R'ₘSiX₍₄₋ₘ₎ (I)
in which the groups X, which may be the same or different, relate to hydrogen, halogen, alkoxy, acyloxy, alkylcarbonyl, alkoxycarbonyl or -NR''₂ (R'' = H and or alkyl) and the residual groups R', which may be the same or different, represent alkyl, alkenyl, alkinyl, aryl, arylalkyl, alkylaryl, arylalkenyl, alkenylaryl, arylalkinyl or alkinylaryl, and these residual groups may be separated by O- or S-atoms or the group -NR'' and may carry one or more substitutes from the halogen group and the optionally substituted amino, amid, aldehyde, keto, alkylcarbonyl, carboxy, mercapto, cyano, hydroxy, alkoxy, alkoxycarbonyl, sulphonic acid, phosphoric acid, acryloxy, methacryloxy, epoxy or vinyl groups, and m has the value 1, 2 or 3,
and/or an oligomer derived therefrom, in an amount of 25 to 95% mol., calculated on the basis of the total mol. number of the starting (monomer) component;
b) of at least one aluminium compound of the total formula II
AlR₃ (II)
in which the residual groups, which may be the same of different, relate to halogen, alkyl, alkoxy, acyloxy or hydroxy, and the last-mentioned groups may be replaced by chelate ligands,
and/or an oligomer derived therefrom,
and/or an optionally complexed aluminium salt of an inorganic or organic acid, in an amount of 5 to 75% mol., calculated on the basis of the total mol. number of the starting (monomer) component;
and optionally
c) of one of more not easily volatilised oxides, soluble in the reactant, of an element of the main group Ia to Va or the subsidiary groups IIb, IIIb, Vb to VIIIb in the periodic system, with the exception of Al, and/or one or more compounds of one of these elements, soluble in the reactant and not easily volatilised under the reaction conditions, in an amount of 0 to 70% mol., calculated on the basis of the total mol. number of the starting (monomer) component;
with a smaller amount of water than the amount required stoichiometrically for the complete hydrolysis of the hydrolysable groups.

12. Composition according to Claim 11, characterised in that it was further condensed by adding additional water, which completely of partially hydrolyses the remaining hydrolysable groups, and optionally a condensation catalyst.

13. Composition according to Claim 11 or 12, characterised in that it contains the usual additives such as organic dilutants, levelling agents, colouring agents, uv stabilisers, fillers, viscosity regulators, lubricants, wetting agents, anti-settling agents and oxidation inhibitors.

## Revendications

1. Procédé de production de matériaux résistant à la rayure, caractérisé en ce qu'on utilise une composition qu'on obtient par précondensation hydrolytique, le cas échéant en présence d'un catalyseur de condensation, de :
a) au moins un silane organofonctionnel de formule I :
R'ₘSi X₍₄₋ₘ₎ (I)
dans laquelle les groupes X, qui peuvent être identiques ou différents, représentent un hydrogène, halogène, alcoxy, acyloxy, alkylcarbonyle, alcoxycarbonyle ou -NR''₂ (R'' = H) et/ou alkyle et les restes R', qui peuvent être identiques ou différents, représentent un alkyle, alcényle, alcynyle, aryle, arylalkyle, alkylaryle, arylalcényle, alcénylaryl, arylalcynyle ou alcynylaryle, où ces restes peuvent être interrompus par des atomes -O- ou -S- ou les groupes -NR'', et peuvent être un ou plusiurs substituants du groupe des halogènes et des groupes amino, amide, aldéhyde, céto, alkylcarbonyle, carboxy-, mercapto, cyano, hydroxy, alcoxy, alcoxycarbonyle, acide sulfonique, acide phosphorique, acryloxy-, méthacryloxy-, époxy- ou vinyle, éventuellement substitués et m a la valeur 1, 2 ou 3 ;
et/ou l'un des ses oligomères qui en dérive, en une quantité de 25 à 95 % molaire, rapporté au nombre de mole total des composants (monomères) de départ;
b) au moins un composé d'aluminium de formule globale II,
AlR₃ (II)
où les restes R, qui peuvent être identiques ou différents représentent un halogène, alkyle, alcoxy, acyloxy ou hydroxy, où les groupes qu'on vient de citer peuvent être remplacés en totalité ou en partie par des ligands chélates et/ou un oligomère qui en dérive et/ou un sel d'aluminium complexé le cas échéant d'un acide minéral ou organique, en une quantité de 5 à 75 % molaire, par rapport au nombre total molaire des composant (monomères) de départ ; et le cas échéant,
c) un ou plusieurs oxydes peu volatils solubles dans le milieu réactionnel d'un élément d'un groupe principal Ia à Va ou d'un sous groupe IIb, IIIb, Vb à VIIIb du tableau périodique, à l'exception de Al et/ou d'un ou plusieurs composés d'un de ces éléments formant un oxyde peu volatil dans les conditions de la réaction, solubles dans le milieu réactionnel,
en une quantité de 0 à 70 % molaire, par rapport au nombre total de moles des composants (monomères) de départ, soit on condense avec une quantité d'eau plus faible que la quantité stoechiométriquement nécessaire à l'hydrolyse complète des groupes hydrolysables, soit
(i) on poursuit la condensation par addition d'eau supplémentaire pour hydrolyser la totalité ou une partie des groupes hydrolysables restants, ainsi qu'en présence le cas échéant d'un catalyseur de condensation et ensuite on dépose sur un substrat ou on soumet à un procédé de moulage et/ou,
(ii) on dépose sur un substrat ou on soumet à un processus de moulage, et on condense dans une atmosphère contenant de la vapeur d'eau;
et ensuite on durcit.

2. Procédé selon la revendication 1, caractérisé en ce qu'on utilise la composition comme vernis qu'on dépose sur un substrat.

3. Procédé selon la revendication 1 ou la revendication 2, caractérisé en ce que pour produire des matériaux résistant à la rayure on utilise par rapport au nombre total de moles des composants de départ 40 à 90 % molaire, notamment 40 à 802 % molaire des composants (a), 10 à 30 % molaire de composant (b) et au plus 50 % molaire de composant (c).

4. Procédé selon l'une des revendications 1 à 3, caractérisé en ce qu'on réalise la post-condensation en présence d'un catalyseur de condensation acide ou basique.

5. Procédé selon l'une des revendications 1 à 4, caractérisé en ce qu'on introduit la quantité d'eau nécessaire à la précondensation au moyen d'absorbants contenant de l'humidité, de solvants organiques contenant de l'eau, d'hydrates de sels ou de systèmes libérant de l'eau.

6. Procédé selon l'une des revendications 2 à 5, caractérisé en ce qu'on traite la surface du substrat avec un primaire avant de déposer le vernis, on chauffe, on rince et/ou on expose à une décharge électrique.

7. Procédé selon l'une des revendications 1 à 6, caractérisé en ce qu'on durcit la composition par traitement thermique à une température pouvant atteindre 200°C, de préférence 60 à 150°C et/ou par traitement avec un rayonnement, de préférence des IR ou des micro-ondes.

8. Procédé selon l'une des revendications 1 à 7, caractérisé en ce qu'on post-traite chimiquement et/ou physiquement la composition durcie, de préférence par irradiation (UV), laser.

9. Procédé selon l'une des revendications 1 à 8, caractérisé en ce qu'on incorpore à la composition des additifs habituels, comme des diluants organiques, des agents d'écoulement, des colorants, des stabilisants UV, des charges, des régulateurs de viscosité, des lubrifiants, des mouillants, des agents antisédimentation et des antioxydants.

10. Matériaux résistant à la rayure notamment substrats munis de revêtements résistant à la rayure qu'on peut obtenir selon le procédé de l'une des revendications 1 à 9.

11. Composition pour produire des matériaux résistant à la rayure, caractérisé en ce qu'on l'obtient par précondensation hydrolytique, le cas échéant en présence d'un catalyseur de condensation, de :
a) au moins un silane organofonctionnel de formule I :
R'ₘSi X₍₄₋ₘ₎ (I)
dans laquelle les groupes X, qui peuvent être identiques ou différents représentent un hydrogène, halogène, alcoxy, acyloxy, alkylcarbonyle, alcoxycarbonyle ou -NR''₂ (R'' = H) et/ou alkyle et les restes R', qui peuvent être identiques ou différents représentent un alkyle, alcényle, alcynyle, aryle, arylalkyle, alkylaryle, arylalcényle, alcénylaryl, arylalcynyle ou alcynylaryle, où ces restes peuvent être interrompus par des atomes -O- ou -S- ou les groupes -NR'', et peuvent être un ou plusiurs substituants du groupe des halogènes et des groupes amino, amide, aldéhyde, céto, alkylcarbonyle, carboxy-, mercapto, cyano, hydroxy, alcoxy, alcoxycarbonyle, acide sulfonique, acide phosphorique, acryloxy-, méthacryloxy-, époxy- ou vinyle, éventuellement substitués et m a la valeur 1, 2 ou 3,
et/ou un des ses oligomères qui en dérive, en une quantité de 25 à 95 % molaire, rapporté au nombre de mole total des composants (monomères) de départ;
b) au moins un composé d'aluminium de formule globale II,
AlR₃ (II)
où les restes R, qui peuvent être identiques ou différents représentent un halogène, alkyle, alcoxy, acyloxy ou hydroxy, où les groupes qu'on vient de citer peuvent être remplacés en totalité ou en partie par des ligands chélates et/ou un oligomère qui en dérive et/ou un sel d'aluminium complexé le cas échéant d'un acide minéral ou organique, en une quantité de 5 à 75 % molaire, par rapport au nombre total molaire des composant (monomères) de départ ; et le cas échéant,
c) un ou plusieurs oxydes peu volatils solubles dans le milieu réactionnel d'un élément d'un groupe principal Ia à Va ou d'un sous groupe IIb, IIIb, Vb à VIIIb du tableau périodique, à l'exception de Al et/ou d'un ou plusieurs composés d'un de ces éléments formant un oxyde peu volatil dans les conditions de la réaction, solubles dans le milieu réactionnel.

12. Composition selon la revendication 11, caractérisée en ce qu'on réalise la post-condensation par addition d'eau supplémentaire, qui provoque l'hydrolyse totale ou partielle des groupes hydrolysables restant, ainsi que de catalyseur de condensation éventuellement.

13. Composition selon la revendication 11 ou 12, caractérisée en ce qu'elle contient des additifs usuels comme des diluants organiques, des agents d'écoulement, des colorants, des stabilisants UV, des charges, des régulateurs de viscosité, des lubrifiants, des mouillants, des agents antisédimentation ou des antioxydants.
